# EUROPÄISCHE PATENTANMELDUNG

(11) **EP 3 653 409 A1**
(43) Veröffentlichungstag der Anmeldung: **20.05.2020**
(21) Anmeldenummer: 19000492.9
(22) Anmeldetag: 30.10.2019
(51) Int. Cl.: B60G 9/02, B60G 5/00, B62D 61/12, B60B 35/04, B60G 17/04, B60G 11/26, B60G 9/00

(54) **HYDROPNEUMATISCHE ACHSE**

(30) Priorität: 14.11.2018 DE 202018005267 U
(71) Anmelder: Eder GmbH Fahrzeug- & Maschinenbau, 83104 Tuntenhausen (DE)
(72) Erfinder: Eder, Peter, 83104 Tuntenhausen (DE)

(57) **Zusammenfassung**

Hydro-pneumatische Achse (1) für Fahrzeuge, bei welcher die Tragachse (11) über eine parallelogrammartige Längslenker-Einrichtung (53) mit dem Rahmen (4) in Verbindung steht, wobei diese in Form einer gezogenen, gelenkig gelagerten Längslenker-Einrichtung (53) ausgebildet ist.

## Beschreibung

Die vorliegende Erfindung betrifft eine hydropneumatische Achse für Reisemobile, Kastenwägen, Kofferfahrzeuge, Verkaufsfahrzeuge oder Vans, mit den in dem Oberbegriff des Patentanspruchs 1 angegebenen Merkmalen.

Aus dem Stand der Technik ist es bekannt, Reisemobile, Kastenwägen, Kofferfahrzeuge, Verkaufsfahrzeuge oder Vans mittelbar oder unmittelbar über mechanische oder pneumatische Federungen mit der oder den Rad-Achsen zu verbinden.

Diese aus dem Stand der Technik bekannten mechanischen oder pneumatischen Federungen sind insbesondere deswegen nachteilig, weil sie in der Regel eine besonders ausgeprägte, unter konstruktiven Gesichtspunkten erheblich störende Raumforderung aufweisen.

Nachteilig ist im Falle der bekannten mechanischen oder pneumatischen Federungen ferner, dass ihr Lenk- und Fahrverhalten bei Ausschöpfung der maximal zulässigen Nutzlast unkomfortabel sind.

Aufgabe der vorliegenden Erfindung ist daher die Bereitstellung einer Achse für Reisemobile, Kastenwägen, Kofferfahrzeuge, Verkaufsfahrzeuge oder Vans, welche nur kleine Abmessungen benötigt, folglich lediglich sehr geringe Raumforderung unter konstruktiven Gesichtspunkten erfordert und daher sehr kompakt ist und welche - selbst bei einer Ausschöpfung der maximal zulässigen Nutzlast - über ein besonders komfortables Lenk- und Fahrverhalten verfügt.

Erfindungsgemäß wird diese Aufgabe bei einer gattungsgemäßen Vorrichtung durch die in dem Patentanspruches 1 angegebenen Merkmale gelöst.

Besonders bevorzugte Ausführungsformen der erfindungsgemäßen Vorrichtung sind Gegenstand der Unteransprüche.

Ausführungsbeispiele der Erfindung werden anhand der Zeichnungen näher beschrieben. Es zeigen:

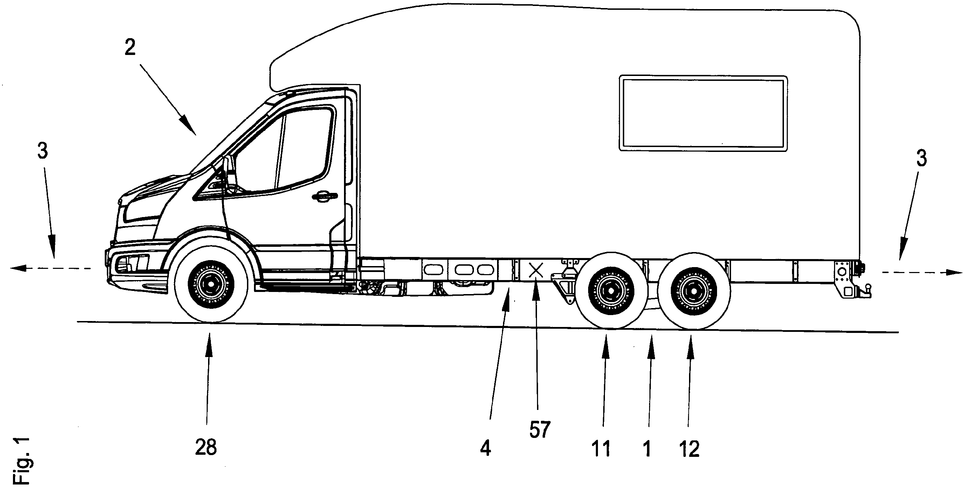

Figur 1 eine schematische Seitenansicht eines Reisemobiles mit einer frontseitigen Vorderachse (28) und einer etwa auf Höhe des Schwerpunktes des Reisemobiles befindlichen, in Form einer Tandemachse ausgebildeten hydropneumatischen Achse (1), wobei die tandemachsenartige Achse (1) eine frontseitige Tragachse (11) und eine rückseitige Liftachse (12) umfasst;

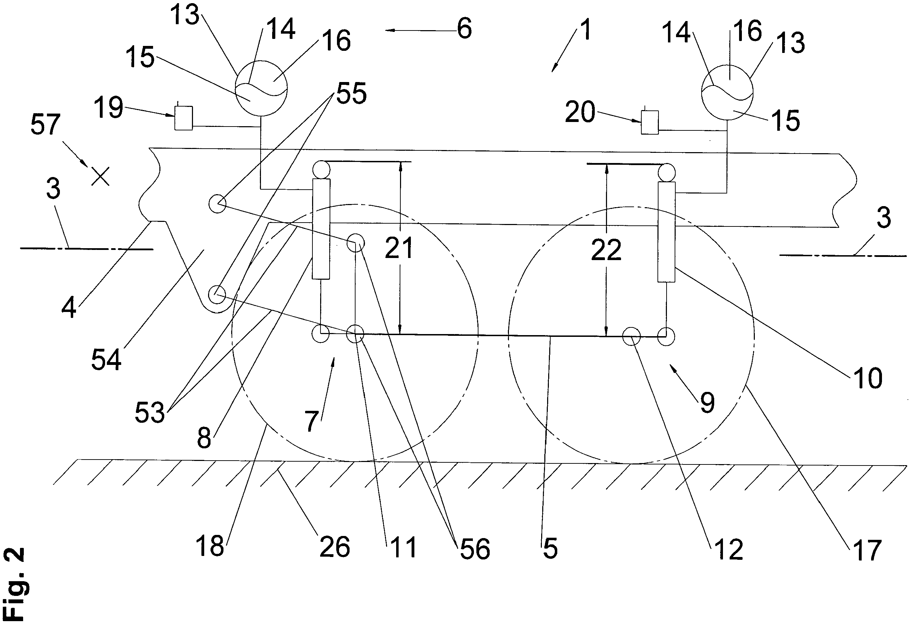

Figur 2 eine schematische, teilweise geschnittene Seitenansicht einer erfindungsgemäßen, in Form einer Tandemachse ausgebildeten hydropneumatischen Achse (1), in welcher insbesondere die gezogene, parallelogrammartigen Längslenker-Einrichtungen (53), die diversen Blasenspeicher (13) für das Öl (15) der Hydraulikzylinder (8 und 10) und das Federungs-Gas (16) oberhalb der Membranen (14) und die Einwirkungs-Orte einerseits der mit dem zugehörigen Blasenspeicher (13) in Verbindung stehenden Vorrichtung (19) zur Regelung und Steuerung der Längen (21) der beiden frontseitigen Hydraulikzylinder (8) und andererseits der mit dem zugehörigen Blasenspeicher (13) in Verbindung stehenden Vorrichtung (20) zur Regelung und Steuerung der Längen (22) der beiden rückseitigen Hydraulikzylinder (10), dargestellt sind;

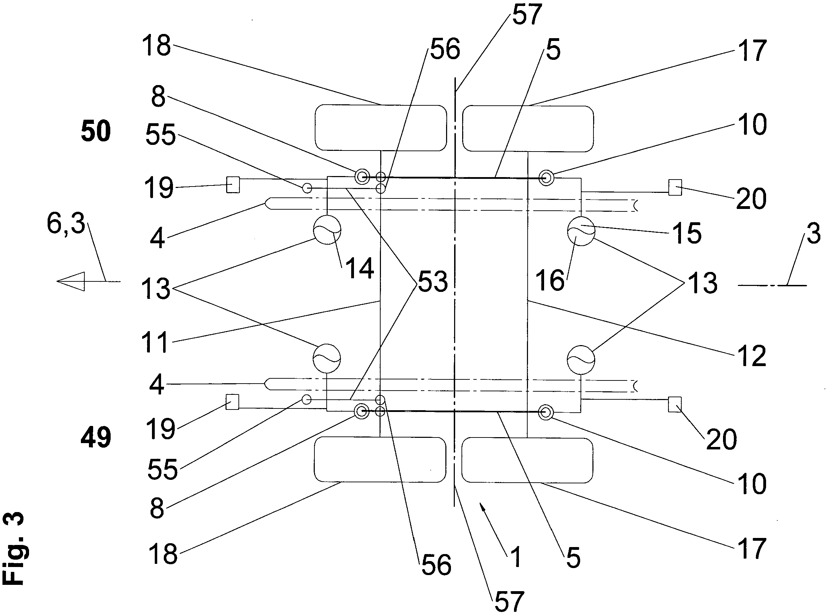

Figur 3 eine schematische, teilweise geschnittene Draufsicht auf die erfindungsgemäße, in Figur 2 dargestellte hydropneumatische Achse (1);

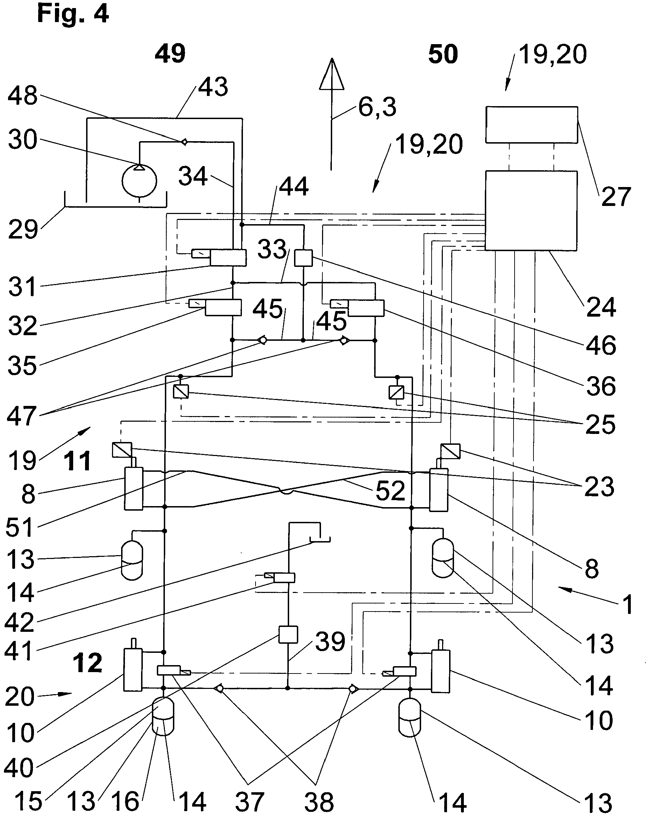

Figur 4 ein schematisches Hydraulik-Schema und Anschluss-Bild einer erfindungsgemäßen hydro-pneumatischen Achse (1), bei welcher eine Vorrichtung (19) zur Regelung und Steuerung der Längen (21) der beiden frontseitigen Hydraulikzylinder (8) der Tragachse (11) einerseits und eine Vorrichtung (20) zur Regelung und Steuerung der Längen (22) der beiden rückseitigen Hydraulikzylinder (10) der Liftachse (12) andererseits zum Einsatz kommen, wobei beide Vorrichtungen (19, 20) zur Regelung und Steuerung mittelbar oder unmittelbar mit einem jeweils zugehörigen Blasenspeicher (13) in Verbindung stehen.

Wie den Figuren 1 bis 4 zu entnehmen ist, betrifft die vorliegende Erfindung eine hydro-pneumatische Achse (1) für Reisemobile, Kastenwägen, Kofferfahrzeuge, Verkaufsfahrzeuge oder Vans.

Insbesondere die Figuren 2 und 3 zeigen, dass die erfindungsgemäße hydropneumatische Achse (1) vorzugsweise zwei - in einer Draufsicht - sich beidseitig von und parallel zu der Längsachse (3) erstreckende Längsträger (5) umfassen kann.

Im Allgemeinen können die beiden in die Fahrtrichtung (6) weisenden, frontseitigen Endbereiche (7) der beiden Längsträger (5) jeweils über einen frontseitigen Hydraulikzylinder (8) mit dem Rahmen (4) des Reisemobiles, Kastenwagens, Kofferfahrzeuges, Verkaufsfahrzeuges oder Vans mittelbar oder unmittelbar in Verbindung stehen.

Vorzugsweise können die beiden entgegen die Fahrtrichtung (6) weisenden, rückseitigen Endbereiche (9) der beiden Längsträger (5) jeweils über einen rückseitigen Hydraulikzylinder (10) mit dem Rahmen (4) des Reisemobiles, Kastenwagens, Kofferfahrzeuges, Verkaufsfahrzeuges oder Vans mittelbar oder unmittelbar in Verbindung stehen.

In der Regel können jeder der frontseitigen Hydraulikzylinder (8) und jeder der rückseitigen Hydraulikzylinder (10) mit einem oder mehreren separaten oder zu der Tragachse (11) und der Liftachse (12) zugeordneten Blasenspeichern (13) in mittelbarer oder unmittelbarer Verbindung stehen.

Im Allgemeinen kann jeder Blasenspeicher (13) eine flexible Membrane (14) umfassen, die das Öl (15) der Hydraulikzylinder (8, 10) von einem darüber vorgesehenen Federungs-Gas (16) trennt.

Aufgrund des Vorsehens dieser Blasenspeicher (13) mit dem Federungsgas (16) oberhalb von der Membrane (14) kann die erfindungsgemäße hydropneumatische Achse (1) in einer besonders kompakten und leichten Bauweise ausgebildet sein und mit dem Federungs-Komfort einer pneumatischen Federung versehen werden, obwohl die erfindungsgemäße hydro-pneumatische Achse (1) keinen raumfordernden und störungsanfälligen üblichen pneumatischen Antrieb umfasst.

Vorzugsweise kann sich zwischen den beiden gegenüberliegenden frontseitigen Endbereichen (7) der beiden Längsträger (5) - in rechtwinkliger Ausrichtung zu der Längsachse (3) des Reisemobiles, Kastenwagens, Kofferfahrzeuges, Verkaufsfahrzeuges oder Vans - eine Tragachse (11) erstrecken.

Insbesondere den Figuren 2 und 3 ist zu entnehmen, dass die Tragachse (11) über eine in der Seitenansicht parallelogrammartige, mehrteilige Längslenker-Einrichtung (53) mit dem Rahmen (4) des Reisemobiles, Kastenwagens, Kofferfahrzeuges, Verkaufsfahrzeuges oder Vans mittelbar oder unmittelbar in Verbindung stehen kann.

Vorzugsweise kann die Längslenker-Einrichtung (53) eine geführte, vertikale Auf- und Ab-Bewegung der Tragachse (11) im Wesentlichen ohne Bewegung der Tragachse (11) entlang der Längsachse (3) des Fahrzeuges (2) ermöglichen.

Im Allgemeinen können die linken und die rechten Rahmenseiten (4) des Reisemobiles, Kastenwagens, Kofferfahrzeuges, Verkaufsfahrzeuges oder Vans in Fahrtrichtung (6) - frontseitig vor der Tragachse (11) - jeweils einen nach unten weisenden Vorsprung (54) aufweisen (siehe insbesondere Figur 2).

Ebenfalls aus Figur 2 geht hervor, dass an diesen Vorsprüngen (54) und/oder in den vertikal darüber befindlichen Abschnitten des Rahmens (4) des Reisemobiles, Kastenwagens, Kofferfahrzeuges, Verkaufsfahrzeuges oder Vans - in vertikaler Ausrichtung jeweils übereinanderliegend - die beiden rahmenseitigen, frontseitigen Aufhängungen (55) der gelenkig gelagerten, parallelogrammartigen Längslenker-Einrichtung (53) mittelbar oder unmittelbar vorgesehen sein können.

Vorzugsweise können die beiden rückseitigen Aufhängungen (56) der gelenkig gelagerten, parallelogrammartigen Längslenker-Einrichtung (53) - ebenfalls einander vertikal gegenüberliegend - mit der Tragachse (11) in unmittelbarer oder mittelbarer Verbindung stehen.

Der Vorteil einer derart ausgestalteten Längslenker-Einrichtung (53) liegt darin, dass sie in Form einer gezogenen, gelenkig gelagerten Längslenker-Einrichtung (53) ausgebildet ist, wodurch sich eine ausgeprägte Verbesserung des Lenk- und Fahrverhaltens des Reisemobiles, Kastenwagens, Kofferfahrzeuges, Verkaufsfahrzeuges oder Vans - selbst bei Aufnahme der maximalen Nutzlast - ergibt.

Aus den Figuren 2 und 3 folgt ferner, dass sich zwischen den beiden gegenüberliegenden rückseitigen Endbereichen (9) der beiden Längsträger (5) - in rechtwinkliger Ausrichtung zu der Längsachse (3) des Reisemobiles, Kastenwagens, Kofferfahrzeuges, Verkaufsfahrzeuges oder Vans - eine Liftachse (12) erstrecken kann.

Bereits aus den Figuren 2, 3 und 4 geht hervor, dass auf die beiden frontseitigen Hydraulikzylinder (8) der Tragachse (11) eine oder mehrere Vorrichtungen (19) zur sensorgesteuerten und manuellen Regelung und Steuerung der Längen (21) der beiden frontseitigen Hydraulikzylinder (8) mittelbar oder unmittelbar einwirken können.

Vorzugsweise kann bei einer beladungsbedingten Abweichung des Ist-Wertes der Länge (21) des frontseitigen Hydraulikzylinders (8) von einem Soll-Wert die Länge (21) im Rahmen einer Niveauregelung automatisch auf ihren Soll-Wert einstellbar sein.

Im Allgemeinen können auf die beiden rückseitigen Hydraulikzylinder (10) eine oder mehrere Vorrichtungen (20) zur sensorgesteuerten und manuellen Regelung und Steuerung der Längen (22) der beiden rückseitigen Hydraulikzylinder (10) mittelbar oder unmittelbar einwirken.

In der Regel kann diese Vorrichtung (20) derart ausgestaltet sein, dass die Länge (22) des rückseitigen Hydraulikzylinders (10) - bei geringer Belastung des Rahmens (4) - zur Anhebung der rückseitigen Liftachse (12) verkürzbar ist.

In besonders bevorzugten Ausführungsformen der erfindungsgemäßen hydropneumatischen Achse (1) für Reisemobile, Kastenwägen, Kofferfahrzeuge, Verkaufsfahrzeuge oder Vans kann über die beiden Vorrichtungen (19, 20) zur Regelung und Steuerung der Längen (21, 22) der beiden frontseitigen Hydraulikzylinder (8) und der beiden rückseitigen Hydraulikzylinder (10) eine im wesentlichen exakte horizontale Ausrichtung des Reisemobiles (2), Kastenwagens, Kofferfahrzeuges, Verkaufsfahrzeuges oder Vans - bei dessen Stillstand - in Bezug auf seine Längsachse (3) und/oder in Bezug auf seine Querachse (57) - abhängig oder unabhängig voneinander - bewirkbar sein.

Zur Feststellung der exakt horizontalen Ausrichtung in Bezug auf die Längsachse (3) und/oder die Querachse (57) des Reisemobiles, Kastenwagens, Kofferfahrzeuges, Verkaufsfahrzeuges oder Vans können ein oder mehrere Lage-Sensoren vorgesehen sein, welche vorzugsweise mit der Vorrichtung (19) zur Regelung und Steuerung der Längen (21) der beiden frontseitigen Hydraulikzylinder (8) der Tragachse (11) und/oder mit der Vorrichtung (20) zur Regelung und Steuerung der Längen (22) der beiden rückseitigen Hydraulikzylinder (10) der Liftachse (12) in Verbindung stehen.

Insbesondere bei welligen, unebenen oder schrägen Campingplätzen macht sich diese Möglichkeit zur im wesentlichen exakt horizontalen Ausrichtung des Reisemobiles, Kastenwagens, Kofferfahrzeuges, Verkaufsfahrzeuges oder Vans ausgesprochen positiv bemerkbar, zumal dann der mühsame und zeitaufwendige Einsatz von Unterlegkeilen, Rampen oder das Ausfahren von Stützelementen nicht mehr notwendig ist.

In der Regel kann diese vorbeschriebene vertikale Höhenverstellbarkeit des Rahmens (4) in dem Bereich von etwa 30,0 mm bis 150,0 mm, vorzugsweise in dem Bereich von 40,0 mm bis 140,0 mm, insbesondere in dem Bereich von 45,0 mm bis 130,0 mm, liegen. Diese vertikale Höhenverstellbarkeit macht sich unter anderem auch bei dem Transport auf Fähren äußerst vorteilhaft bemerkbar. Außerdem bewirkt sie eine deutliche Steigerung desjenigen vorderen und/oder hinteren Böschungswinkels, bei welchem das mit einer erfindungsgemäßen Achse (1) ausgestattete Fahrzeug sicher handhabbar ist.

In besonders bevorzugten Ausführungsformen der erfindungsgemäßen hydropneumatischen Achse (1) für Reisemobile, Kastenwägen, Kofferfahrzeuge, Verkaufsfahrzeuge oder Vans kann der Abstand zwischen dem Untergrund (26) einerseits und dem Rahmen (4) andererseits - zur vertikalen Absenkung der Ladekante und/oder des Rahmens (4) - variabel einstellbar sein.

Zur variablen Einstellung dieses Abstandes können die frontseitigen Hydraulikzylinder (8) und/oder die rückseitigen Hydraulikzylinder (10) in Bezug auf ihre Längen variabel einstellbar sein.

Mittels der frontseitigen Hydraulikzylinder (8) und/oder mittels der rückseitigen Hydraulikzylinder (10) - abhängig oder unabhängig voneinander - ist in dem Falle der vorliegenden erfindungsgemäßen hydro-pneumatischen Achse (1) eine Schwenkbewegung des Rahmens (4) um die Querachse (57) und/oder um die Längsachse (3) möglich.

Die Ausbildung einer solchen Schwenkmöglichkeit des Rahmens (4) um die Querachse (57) und/oder um die Längsachse (3) gestattet unter anderem eine besonders gründliche und vollständige Entleerung von Fäkalien- oder Wassertanks.

Wie insbesondere Figur 4 zu entnehmen ist, kann die Vorrichtung (20) zur Regelung und Steuerung der Längen (22) der beiden rückseitigen Hydraulikzylinder (10) der Liftachse (12) einen, zwei oder mehrere Druck-Sensoren (25) zur Ermittlung des beladungsabhängigen Druckes durch den Rahmen (4) umfassen.

In besonders bevorzugten Ausführungsformen der erfindungsgemäßen hydropneumatischen Achse (1) können diese Druck-Sensoren (25) mit der Datenverarbeitungseinrichtung (24) in elektrisch leitender Verbindung stehen.

Diese Datenverarbeitungseinrichtung (24) kann in der Regel die von den Druck-Sensoren (25) ermittelten Ist-Werte mit in der Datenverarbeitungseinrichtung (24) hinterlegten Druck-Grenzwerten vergleichen.

Bei einer Unterschreitung des Druck-Grenz-Wertes kann durch Zufuhr von Öl zu dem rückseitigen Hydraulikzylinder (10) und durch ein Sperren eines Tragachse (11)-Liftachse (12)-Verbindungsventils (37) automatisch eine Anhebung der Liftachse (12) mittelbar oder unmittelbar veranlasst werden.

Bei Überschreitung des Druck-Grenz-Wertes kann durch Öffnen des Tragachse (11)- Liftachse (12)- Verbindungsventils (37) automatisch eine Absenkung der Liftachse (12) - im Rahmen einer Überwachung des auf dem Rahmen (4) aufliegenden Ladegewichtes - mittelbar oder unmittelbar veranlasst werden.

Figur 4 verdeutlicht ebenfalls, dass in der Datenverarbeitungseinrichtung (24) für die den Systemdruck messenden Drucksensoren (25) ein Druck-Grenzwert 1 für ein Stehen des Fahrzeuges (2) auf allen drei Achsen [Vorderachse (28), Tragachse (11) und Liftachse (12)] und ein Druck-Grenzwert 2 für ein Stehen des Fahrzeuges (2) auf zwei Achsen [Vorderachse (28) und Tragachse (11)] hinterlegbar sein kann.

In der Regel ermöglicht die Datenverarbeitungseinrichtung (24) nur dann ein Anheben der Liftachse (12) mittels der rückseitigen Hydraulikzylinder (10), wenn der von den Drucksensoren (25) ermittelte Ist-Systemdruck kleiner als der Druck-Grenzwert 1 ist.

In bevorzugten Ausführungsformen der erfindungsgemäßen hydro-pneumatischen Achse (1) kann die Datenverarbeitungseinrichtung (24) bei angehobener Liftachse (12) automatisch deren Absenkung mittels der rückseitigen Hydraulikzylinder (10) veranlassen, wenn nach einer Beladung der Druck-Grenzwert 2 überschritten wird.

Im Allgemeinen kann die Datenverarbeitungseinrichtung (24) bei abgesenkter Liftachse (12) deren Anhebung mittels der rückseitigen Hydraulikzylinder (10) veranlassen, wenn nach einer Entladung des Rahmens (4) der Druck-Grenzwert 1 unterschritten wird.

Im Allgemeinen können die Vorrichtungen (19, 20) zur Regelung und Steuerung der Längen (21, 22) der frontseitigen Hydraulikzylinder (8) der Tragachse (11) und der rückseitigen Hydraulikzylinder (10) der Liftachse (12) einen oder mehrere Sensoren zur Ermittlung einer horizontalen oder geneigten Ausrichtung des Rahmens (4) des Reisemobiles, Kastenwagens, Kofferfahrzeuges, Verkaufsfahrzeuges oder Vans umfassen.

Diese Sensoren können mit der Datenverarbeitungseinrichtung (24) in elektrisch leitender Verbindung stehen.

In besonders bevorzugten Ausführungsformen der erfindungsgemäßen hydropneumatischen Achse (1) kann ein Tragachse (11)- Liftachse (12)-Verbindungsventil (37) öffnen, wenn sowohl die Tragachse (11) als auch die Liftachse (12) mit dem Untergrund (26) mittelbar oder unmittelbar in Kontakt stehen.
Eine Öffnung dieses Tragachse (11)- Liftachse (12)-Verbindungsventiles (37) kann alternativ hierzu auch dann veranlasst werden, wenn beabsichtigt ist, dass die Liftachse (12) von ihrem angehobenen Zustand in ihren abgesenkten Zustand verändert werden soll.

In der Regel stehen dann die frontseitigen Hydraulikzylinder (8) und die rückseitigen Hydraulikzylinder (10) jeweils kolbenbodenseitig miteinander in Verbindung.

In besonders bevorzugten Ausführungsformen der erfindungsgemäßen hydropneumatischen Achse (1) kann die Datenverarbeitungseinrichtung (24) - beispielsweise auf durch einen über ihre Eingabeeinrichtung (27) eingegebenen Anfahrhilfe-Befehl - für einen kurzen Zeitraum in dem Bereich von beispielsweise bis zu 90 Sekunden, die vollständige oder teilweise Anhebung der Liftachse (12) durch den rückseitigen Hydraulikzylinder (10) bewirken.

Diese Anfahrhilfe-Funktion ist insbesondere in beladenem Zustand des Rahmens (4) möglich, in dem sowohl die Tragachse (11) als auch die Liftachse (12) mit dem Untergrund (26) in Kontakt stehen.

Die Anfahrhilfe-Funktion dient insbesondere dazu, den Bodendruck der angetriebenen Tragachse (11) zu erhöhen.

In der Regel ist die Anfahrhilfe-Funktion beispielsweise beendbar a) durch einen auf der Eingabeeinrichtung (27) der Datenverarbeitungseinrichtung (24) manuell eingebbaren Abbruchbefehl und/oder b) durch die Überschreitung der Fahrgeschwindigkeit des Kraftfahrzeuges (2) von mehr als 30 km/h und/oder c) durch Ablauf einer Frist von maximal 90 Sekunden nach dem Start der Anfahrhilfe-Funktion.

In besonders bevorzugten Ausführungsformen der erfindungsgemäßen hydropneumatischen Achse (1) kann im Rahmen der Funktion "Anfahrhilfe" - zur Steigerung der Traktion an der angetriebenen Tragachse (11) - die Liftachse (12) solange nach oben angehoben werden, bis sich eine Druckerhöhung in dem Bereich von 20 % bis 40 % - bezogen auf den von den Drucksensoren (25) ermittelten Ist-System-Druck - einstellt.

In der Regel kann der zulässige, von den Drucksensoren (25) ermittelte System-Druck in dem Bereich von 50 bar bis 200 bar liegen.

Vorzugsweise kann die Vorrichtung (19, 20) zur Regelung und Steuerung der Längen (21, 22) der Hydraulikzylinder (8, 10) eine oder mehrere Einrichtungen zur Anzeige zumindest der jeweils aktiven Betriebsart und/oder Funktion, beispielsweise "manuell", "automatische Niveauregelung", "Niveauüberwachung", "Kalibrierung", "Liftfunktion" und "Anfahrhilfe", umfassen.

Im Allgemeinen kann diese Vorrichtung (19, 20) zusätzlich eine Eingabeeinrichtung (27) für die Datenverarbeitungseinrichtung (24) umfassen, die manuell betätigbare Bedienelemente zumindest beispielsweise für die Funktionen "Achsniveau manuell absenken", "Achsniveau manuell anheben", automatische Niveauregelung", "Kalibrierung" und "Anfahrhilfe" trägt.

Unter Bezugnahme auf Figur 4 wird zu veranschaulichenden Zwecken ausgeführt, dass die Vorrichtung (19) zur Regelung und Steuerung der Längen (21) der beiden frontseitigen Hydraulikzylinder (8) der Tragachse (11) an jeden Hydraulikzylinder (8) jeweils einen Weg-Sensor (23) zur mittelbaren oder unmittelbaren Messung der Länge (21) des jeweiligen frontseitigen Hydraulikzylinders (8) umfassen kann. In der Regel können diese Weg-Sensoren (23) mit einer Datenverarbeitungseinrichtung (24) in elektrisch leitender Verbindung stehen.

Im Allgemeinen kann diese Datenverarbeitungseinrichtung (24) die von den Weg-Sensoren (23) ermittelten Ist-Werte mit in der Datenverarbeitungseinrichtung (24) hinterlegten Soll-Werten vergleichen. In der Regel kann diese Datenverarbeitungseinrichtung (24) bei einer Abweichung des Ist-Wertes von den Soll-Werten oder von den Soll-Wert-Toleranzbändern eine automatische Verlängerung oder Verkürzung der Längen (21) der Hydraulikzylinder (8) durch Öl-Zufuhr oder Öl-Abfluss aus den Hydraulikzylindern (8) - im Rahmen einer automatischen Niveauregelung - zur vertikalen Positionierung des Rahmens (4) auf einem Soll-Niveau veranlassen.

Ebenfalls zu rein veranschaulichenden Zwecken wird ausgeführt, dass in dem Falle der erfindungsgemäßen hydro-pneumatischen Achse (1), die Datenverarbeitungseinrichtung (24) zur Festlegung der oberen und der unteren Anschlagspositionen der frontseitigen Hydraulikzylinder (8) der Tragachse (11) und der rückseitigen Hydraulikzylinder (10) der Liftachse (12) - nach Eingabe eines entsprechenden Befehles auf die Eingabe-Einrichtung (27) der Datenverarbeitungseinrichtung (24) und/oder nach Einschalten der Versorgungsspannung - kalibrierbar sein kann.

Zu dem Zwecke einer Kalibrierung können zunächst über einen manuell an der Eingabe-Einrichtung (27) der Datenverarbeitungseinrichtung (24) einzugebenden Befehl die zu kalibrierenden Hydraulikzylinder (8 und/oder 10) in eine erste Anschlagposition verfahrbar sein, deren Daten dann in die Datenverarbeitungseinrichtung (24) übernehmbar sind.

Vorzugsweise können nachfolgend über einen manuell an der Eingabe-Einrichtung (27) der Datenverarbeitungseinrichtung (24) einzugebenden Befehl die zu kalibrierenden Hydraulikzylinder (8 und/oder 10) in die entgegengesetzte, zweite Anschlagposition verfahrbar sein, deren Daten dann ebenfalls in die Datenverarbeitungseinrichtung (24) übernehmbar sind.

In der Regel kann abschließend der Kalibriermodus durch Eingabe eines entsprechenden Befehles auf die Eingabe-Einrichtung (27) der Datenverarbeitungseinrichtung (24) beendbar sein.

Zu rein veranschaulichenden Zwecken wird ferner unter Bezugnahme auf Figur 4 ausgeführt, dass in dem Falle der erfindungsgemäßen hydro-pneumatischen Achse (1) das Hydrauliksystem stromaufseitig einen oder mehrere Tanks (29) für Hydraulik-Öl (15) umfassen kann. Dieser Tank (29) kann beispielsweise mit einer oder mit mehreren Hydraulikpumpen (30) in Verbindung stehen. Stromabseitig nachfolgend von der Hydraulik-Pumpe (30) kann ein Rückschlagventil (47) vorgesehen sein. In der Regel kann die Hydraulikpumpe (30) mit einem stromabseitigen Hauptventil (31) verbunden sein. Im Allgemeinen kann das Haupt-Ventil (31) einen Ausgang für eine Hydraulik-Ableitung (43) aufweisen. Vorzugsweise kann diese Hydraulik-Ableitung (43) andererseits mit dem Hydraulik-Tank (29) in Verbindung stehen. Zwischen dem Hauptventil (31) und dem Tank (29) in der Hydrauliköl-Ableitung (43) kann eine Hydrauliköl-Leitung (44) abgehen, in welche ein Überdruckventil (45) integrierbar ist. In der Regel kann sich der Hydraulik-HauptStrom (34) stromabseitig von dem Hauptventil (31) in einen linken Hydrauliköl-Pfad (32) und in einen rechten Hydrauliköl-Pfad (33) teilen. Stromabseitig von der Gabelung des Hydraulik-Haupt-Stromes (34) können ein linkes Pfadventil (35) und ein rechtes Pfadventil (36) vorgesehen sein. Stromabseitig nachfolgend von dem linken Pfadventil (35) und von dem rechten Pfadventil (36) können jeweils ein Seiten-Ast (45) der Hydrauliköl-Leitung (44) einmünden. In der Regel können in beiden Seitenästen (45) jeweils ein Rückschlagventil (47) vorgesehen sein. Stromabseitig von den beiden Pfadventilen (35, 36) können ein linker und ein rechter Drucksensor (25) vorgesehen sein. Stromabseitig von den Drucksensoren (25) können jeweils eine Abzweigung des linken und des rechten Hydrauliköl-Pfades (32, 33) bodenseitig in den linken und in den rechten Hydraulikzylinder (8) der Tragachse (11) eintreten. Stromabseitig von diesen Abzweigungen zu den Hydraulikzylindern (8) der Tragachse (11) können ein linker und ein rechter Blasenspeicher (13) mit dem linken und dem rechten Hydraulik-Pfad (32, 33) in Verbindung stehen. Stromabseitig von dem linken und dem rechten Blasenspeicher (13) der Tragachse (11) können der linke und der rechte Hydraulik-Pfad (32, 33) sowohl stangenseitig als auch bodenseitig mit den beiden Hydraulikzylindern (10) der Liftachse (12) in Verbindung stehen. Zwischen diesen stangenseitigen und bodenseitigen Abzweigungen des jeweiligen Hydraulik-Pfades (32, 33) können ein linkes und ein rechtes Tragachse-(11)-Liftachse-(12)-Verbindungsventil (37) vorgesehen sein. Stromabseitig von den Abzweigungen zu den beiden Hydraulikzylindern (10) der Liftachse (12) können ein linker und ein rechter Blasenspeicher (13) der Liftachse (12) vorgesehen sein. Stromabseitig von den beiden Blasenspeichern (13) der Liftachse (12) können ein linkes und ein rechtes Rückschlagventil (38) vorgesehen sein. Stromabseitig von dem linken und dem rechten Rückschlagventil (38) können der linke Hydraulik-Pfad (32) und der rechte Hydraulik-Pfad (33) in eine gemeinsame Hydrauliköl-Sammelleitung (39) münden. Stromabseitig von dem Verbindungsort kann zwischen dem linken Hydrauliköl-Pfad (32) und dem rechten Hydrauliköl-Pfad (33) ein Druckbegrenzungsventil (40) integriert sein. Stromabseitig von diesem Druckbegrenzungsventil (40) kann ein Tankventil (41) vorgesehen sein. Stromabseitig von diesem Tankventil (41) kann ein stromabseitiger Hydraulik-Tank (42) vorgesehen sein, welcher mit dem stromaufseitigen Tank (29) für Hydrauliköl identisch sein kann.

Ebenfalls zu rein veranschaulichenden Zwecken wird unter Bezugnahme auf Figur 4 ausgeführt, dass in dem Falle der erfindungsgemäßen hydro-pneumatischen Achse (1) zwischen der stangenseitigen Kammer des linken Hydraulikzylinders (8) der Tragachse (11) einerseits und der bodenseitigen Kammer des rechten Hydraulikzylinders (8) der Tragachse (11) andererseits eine erste Wankausgleich-Hydrauliköl-Leitung (50) vorgesehen sein kann. Zwischen der bodenseitigen Kammer des linken Hydraulikzylinders (8) der Tragachse (11) einerseits und der stangenseitigen Kammer des rechten Hydraulikzylinders (8) der Tragachse (11) andererseits kann eine weitere Wankausgleich-Hydrauliköl-Leitung (51) vorgesehen sein.

Der besondere Vorteil dieser soeben beschriebenen Verbindung der linken und rechten Hydraulikzylinder besteht darin, dass sie der erfindungsgemäßen hydropneumatischen Achse (1) die Eigenschaften eines Wankausgleiches verleiht. Aufgrund dieses Wankausgleiches kann die erfindungsgemäße hydropneumatische Achse (1) stets ein sehr komfortables Lenk- und Fahrverhalten beibehalten, selbst wenn sie eine besonders große Nutzlast trägt.

Es wird darauf hingewiesen, dass die Vorrichtung (19) zur Regelung und Steuerung der Längen (21) der beiden frontseitigen Hydraulikzylinder (8) der Tragachse (11) einerseits und die Vorrichtung (20) zur Regelung und Steuerung der Längen (22) der beiden rückseitigen Hydraulikzylinder (10) der Liftachse (12) andererseits in Form einer einzigen Vorrichtung zur Regelung und Steuerung der Längen von Hydraulikzylindern ausgebildet sein können. Auch die gemeinsame Nutzung einzelner Bauteile durch die beiden Vorrichtungen (19 und 20) ist möglich. Dies gilt insbesondere für die Datenverarbeitungseinrichtung (24) und deren Eingabeeinrichtung (27) sowie für das Grundschema des in Figur 4 dargestellten Hydraulik-Schaltplanes.

Von besonderem Vorteil kann im Falle der erfindungsgemäßen hydropneumatischen Achse (1) sein, wenn das oberhalb der Membrane (14) befindliche Federungs-Gas (16) in dem oder den Blasenspeichern (13) einen Vorspanndruck aufweist - zur Einstellung der Federsteifigkeit und damit zur Einstellung des Federungskomforts -, welcher in dem Bereich von 25,0 bar bis 50,0 bar, vorzugsweise in dem Bereich von 28,0 bar bis 45,0 bar, insbesondere in dem Bereich von 30,0 bar bis 35,0 bar, liegt.

In der Regel kann dieser Vorspanndruck einmalig von Seiten des Herstellers bei Inbetriebnahme und/oder während der Fahrt einstellbar sein.

Im Allgemeinen liegt das Verhältnis zwischen dem Vorspanndruck des Federungs-Gases (16) einerseits zu dem bei Beladung zu erwartenden maximalen Druck innerhalb des hydraulischen Systems des jeweiligen Hydraulikzylinders (8, 10) andererseits in dem Bereich von 1:3 bis 1:5. Der bei Beladung zu erwartende maximale hydraulische Systemdruck liegt in der Regel etwa bei 130,0 bis 140,0 bar. Ein geringerer Vorspanndruck bzw. Fülldruck des Blasenspeichers (13) führt zu einer höheren Federrate und damit zu einem straffer abgestimmten Fahrwerk. Ein höherer Fülldruck führt zu mehr Fahrkomfort.

In besonders bevorzugten Ausführungsformen der erfindungsgemäßen hydropneumatischen Achse (1) können die frontseitigen Hydraulikzylinder (8) und/oder die rückseitigen Hydraulikzylinder (19) jeweils mit zwei oder mehreren Blasenspeichern (13) in mittelbarer oder unmittelbarer Verbindung stehen. Vorzugsweise kann dann jeder Blasenspeicher (13) einen anderen Vorspanndruck des oberhalb seiner Membrane (14) befindlichen Federungs-Gases (16) aufweisen. Durch Freischaltung einer Verbindung zwischen dem jeweiligen Hydraulikzylinder (8, 10) einerseits und dem Blasenspeicher (13) mit dem passenden Vorspanndruck andererseits, können unterschiedliche Federsteifigkeiten schnell, mühelos und unter weitgehendem Ausschluss von Fehlfunktionsmöglichkeiten einstellbar sein.

Zusammenfassend ist festzustellen, dass im Rahmen der vorliegenden Erfindung eine hydro-pneumatische Achse (1) insbesondere für Reisemobile, Kastenwägen, Kofferfahrzeuge, Verkaufsfahrzeuge oder Vans bereitgestellt wird, welche nur kleine Abmessungen benötigt, folglich eine lediglich sehr geringe Raumforderung unter konstruktiven Gesichtspunkten erfordert und daher sehr kompakt ist.

Ein besonderer Vorteil der erfindungsgemäßen hydro-pneumatischen Achse (1) besteht darin, dass sie - selbst bei einer Ausschöpfung der maximal zulässigen Nutzlast - über ein besonders komfortables Lenk- und Fahrverhalten verfügt.

Gegebenenfalls weist die erfindungsgemäße hydro-pneumatische Achse (1) für Reisemobile, Kastenwägen, Kofferfahrzeuge, Verkaufsfahrzeuge oder Vans auch den Vorteil auf, dass über die beiden Vorrichtungen (19, 20) zur Regelung und Steuerung der Längen (21, 22) der beiden frontseitigen Hydraulikzylinder (8) und der beiden rückseitigen Hydraulikzylinder (10) eine im wesentlichen exakte horizontale Ausrichtung des Reisemobiles (2), Kastenwagens, Kofferfahrzeuges, Verkaufsfahrzeuges oder Vans - bei dessen Stillstand - in Bezug auf seine Längsachse (3) und/oder in Bezug auf seine Querachse (57) - abhängig oder unabhängig voneinander - bewirkbar ist. Diese exakt horizontale Ausrichtung des Reisemobiles (2) macht sich insbesondere bei welligen oder schräg ausgerichteten Stellflächen positiv bemerkbar.

Vorteilhaft ist im Falle der erfindungsgemäßen hydro-pneumatischen Achse (1) ferner, dass sie über die frontseitigen Hydraulikzylinder (8) und/oder die rückseitigen Hydraulikzylinder (10) - abhängig oder unabhängig voneinander - eine vertikale Höhenverstellbarkeit des Rahmens (4) gestattet, welche sich insbesondere bei dem Auf- und Abfahren von Fähren positiv bemerkbar macht und die Bewältigung selbst von großen vorderen und/oder hinteren Böschungswinkeln ermöglicht.

Ein weiterer Vorteil der erfindungsgemäßen hydro-pneumatischen Achse (1) besteht darin, dass sie Schwenkbewegungen des Rahmens (4) um die Querachse (57) und/oder um die Längsachse (3) durchführen kann, wodurch eine besonders gründliche Entleerung von Fäkalien- oder Wassertanks ermöglicht wird.

Ein weiterer Vorteil der erfindungsgemäßen hydro-pneumatischen Achse (1) besteht darin, dass sie keinen separaten, raumfordernden und störungsanfälligen pneumatischen Antrieb für ihren Betrieb benötigt.

Ein besonderer Vorteil der erfindungsgemäßen hydro-pneumatischen Achse (1) besteht ferner darin, dass deren Einrichtung zur Anhebung der Liftachse (12) in besonders kompakter Bauweise ausführbar ist.

Vorteilhaft ist im Falle der erfindungsgemäßen hydro-pneumatischen Achse (1) ferner, dass ihre Einrichtung zur Anhebung der Liftachse (12) ein besonders niedriges Gewicht besitzt.

Aufgrund dieses geringen Gewichtes kann im Falle der erfindungsgemäßen hydro-pneumatischen Achse (1) bei entsprechend langer Nutzungsdauer des Reisemobiles, Kastenwagens, Kofferfahrzeuges, Verkaufsfahrzeuges oder Vans eine beträchtliche Einsparung von Kraftfahrzeug-Treibstoff erfolgen.

Das besonders geringe Gewicht der Einrichtung zur Anhebung der Liftachse (12) ermöglicht darüber hinaus eine längere Nutzungsdauer der Reifen (17, 18) des Reisemobiles, Kastenwagens, Kofferfahrzeuges, Verkaufsfahrzeuges oder Vans.

Vorteilhaft ist im Falle der erfindungsgemäßen hydro-pneumatischen Achse (1) außerdem, dass sie die aus dem Stand der Technik gefürchtete, ausgeprägte Vorlaufzeit des Kfz-Motors zum Aufbau des - bei pneumatischen Antrieben ansonsten erst aufzubauenden - Betriebsdruckes nicht mehr benötigt, da bei ihr ein pneumatischer Antrieb durch die Blasenspeicher (13) funktionell ersetzt wird.

Von besonderem Vorteil ist bei der erfindungsgemäßen hydro-pneumatischen Achse (1) darüber hinaus, dass sie bei vorgegebener Baugröße einen vergleichsweise hohen Boden-Anpressdruck der Tragachse (11) gestattet.

Aufgrund der hydro-pneumatischen Steuerung der beiden Hydraulikzylinder (8 und 10) kann im Falle der erfindungsgemäßen hydro-pneumatischen Achse (1) erstmalig eine tatsächlich exakte Steuerung des Anpressdruckes der Tragachse (11) während der Betätigung der Anfahrhilfe-Funktion und der Liftachse (12) erfolgen.

Ein weiterer Vorteil der erfindungsgemäßen hydro-pneumatischen Achse (1) ist darüberhinaus, dass sie - aufgrund des variablen Vorspanndruckes des Federungs-Gases (16) in dem oder den Blasenspeichern (13) die Einstellung der Federsteifigkeit und damit des Federungskomforts gestattet.

Wie bereits ausgeführt, kann dieser Vorspanndruck einmalig von Seiten des Herstellers bei Inbetriebnahme und/oder sogar während der Fahrt von dem Benutzer einstellbar sein.

Vorteilhaft kann es ferner sein, dass pro Hydraulikzylinder (8,10) jeweils zwei oder mehrere Blasenspeicher (13) vorgesehen sind und dass durch einfache Freischaltung einer Verbindung zwischen dem jeweiligen Hydraulikzylinder (8, 10) einerseits und einem Blasenspeicher (13) mit dem passenden Vorspanndruck andererseits, unterschiedliche Federsteifigkeiten besonders schnell, mühelos und unter weitgehendem Ausschluss von Fehlfunktionsmöglichkeiten einstellbar sind.

Grundsätzlich kann es sich bei dem Federungs-Gas (16) oberhalb der Membrane (14) in dem Blasenspeicher (13) um jedes beliebige, zersetzungsfrei komprimierbare Gas handeln.

Vorzugsweise ist das Federungs-Gas (16) Luft oder Stickstoff oder ein Edelgas oder eine Mischung hiervon.

Zur Befüllung des Raumes zwischen der Membrane (14) und dem oberen Abschnitt des Blasenspeichers (13) können in der Wandung dieses Raumes ein oder mehrere - beispielsweise ventilartig ausgebildete - verschließ- und öffenbare Befüllungseinrichtungen für die Einführung des Federungs-Gases (16) vorgesehen sein.

## Patentansprüche

1. Hydro-pneumatische Achse (1) für Reisemobile, Kastenwägen, Kofferfahrzeuge, Verkaufsfahrzeuge oder Vans, welche zwei - in einer Draufsicht - sich beidseitig von und parallel zu der Längsachse (3) erstreckende Längsträger (5) umfasst, wobei die beiden in die Fahrtrichtung (6) weisenden, frontseitigen Endbereiche (7) der beiden Längsträger (5) jeweils über einen frontseitigen Hydraulikzylinder (8) mit dem Rahmen (4) mittelbar oder unmittelbar in Verbindung stehen, wobei die beiden entgegen die Fahrtrichtung (6) weisenden, rückseitigen Endbereiche (9) der beiden Längsträger (5) jeweils über einen rückseitigen Hydraulikzylinder (10) mit dem Rahmen (4) mittelbar oder unmittelbar in Verbindung stehen, wobei jeder der frontseitigen Hydraulikzylinder (8) und jeder der rückseitigen Hydraulikzylinder (10) mit einem oder mehreren separaten oder zu der Tragachse (11) und der Liftachse (12) zugeordneten Blasenspeichern (13) in mittelbarer oder unmittelbarer Verbindung steht, wobei jeder Blasenspeicher (13) eine flexible Membrane (14) umfasst, die das Öl (15) der Hydraulikzylinder (8, 10) von einem darüber vorgesehenen Federungs-Gas (16) trennt, wobei sich zwischen den beiden gegenüberliegenden frontseitigen Endbereichen (7) der beiden Längsträger (5) - in rechtwinkliger Ausrichtung zu der Längsachse (3) - eine Tragachse (11) erstreckt, wobei die Tragachse (11) über eine in der Seitenansicht parallelogrammartige, mehrteilige Längslenker-Einrichtung (53) mit dem Rahmen (4) mittelbar oder unmittelbar in Verbindung steht, wobei die Längslenker-Einrichtung (53) eine geführte, vertikale Auf- und Ab-Bewegung der Tragachse (11) im wesentlichen ohne Bewegung der Tragachse (11) entlang der Längsachse (3) des Fahrzeuges (2) ermöglicht, wobei die linken und die rechten Rahmenseiten (4) in Fahrtrichtung (6) - frontseitig vor der Tragachse (11) - jeweils einen nach unten weisenden Vorsprung (54) aufweisen, wobei an diesen Vorsprüngen (54) und/oder in den vertikal darüber befindlichen Abschnitten der Rahmen (4) - in vertikaler Ausrichtung jeweils übereinanderliegend - die beiden rahmenseitigen, frontseitigen Aufhängungen (55) der gelenkig gelagerten Längslenker-Einrichtung (53) mittelbar oder unmittelbar vorgesehen sind und wobei die beiden rückseitigen Aufhängungen (56) der gelenkig gelagerten Längslenker-Einrichtung (53) - ebenfalls einander vertikal gegenüberliegend - mit der Tragachse (11) in unmittelbarer oder mittelbarer Verbindung stehen, so dass die gelenkig gelagerte Längslenker-Einrichtung (53) in Form einer gezogenen, gelenkig gelagerten Längslenker-Einrichtung (53) ausgebildet ist, wobei sich zwischen den beiden gegenüberliegenden rückseitigen Endbereichen (9) der beiden Längsträger (5) - in rechtwinkliger Ausrichtung zu der Längsachse (3) - eine Liftachse (12) erstreckt, **dadurch gekennzeichnet, dass** auf die beiden frontseitigen Hydraulikzylinder (8) der Tragachse (11) eine oder mehrere Vorrichtungen (19) zur sensorgesteuerten und manuellen Regelung und Steuerung der Längen (21) der beiden frontseitigen Hydraulikzylinder (8) mittelbar oder unmittelbar einwirken, wobei bei einer beladungsbedingten Abweichung des Ist-Wertes der Länge (21) des frontseitigen Hydraulikzylinders (8) von einem Soll-Wert die Länge (21) im Rahmen einer Niveauregelung automatisch auf ihren Soll-Wert einstellbar ist, wobei auf die beiden rückseitigen Hydraulikzylinder (10) eine oder mehrere Vorrichtungen (20) zur sensorgesteuerten und manuellen Regelung und Steuerung der Längen (22) der beiden rückseitigen Hydraulikzylinder (10) mittelbar oder unmittelbar einwirken, wobei diese Vorrichtung (20) derart ausgestaltet ist, dass die Länge (22) des rückseitigen Hydraulikzylinders (10) - bei geringer Belastung des Rahmens (4) - zur Anhebung der rückseitigen Liftachse (12) verkürzbar ist.

2. Hydro-pneumatische Achse (1) für Reisemobile, Kastenwägen, Kofferfahrzeuge, Verkaufsfahrzeuge oder Vans nach Anspruch 1, **dadurch gekennzeichnet, dass** über die beiden Vorrichtungen (19, 20) zur Regelung und Steuerung der Längen (21, 22) der beiden frontseitigen Hydraulikzylinder (8) und der beiden rückseitigen Hydraulikzylinder (10) horizontale Ausrichtungen des Reisemobiles (2), Kastenwagens oder Kofferfahrzeuges - bei dessen Stillstand - in Bezug auf seine Längsachse (3) und/oder in Bezug auf seine Querachse (57) - abhängig oder unabhängig voneinander - bewirkbar sind.

3. Hydro-pneumatische Achse (1) für Reisemobile, Kastenwägen, Kofferfahrzeuge, Verkaufsfahrzeuge oder Vans nach einem der Ansprüche 1 oder 2, **dadurch gekennzeichnet, dass** der Abstand zwischen dem Untergrund (26) einerseits und dem Rahmen (4) andererseits - zur vertikalen Absenkung der Ladekante und/oder des Rahmens (4) - variabel einstellbar ist, indem die frontseitigen Hydraulikzylindern (8) und/oder die rückseitigen Hydraulikzylindern (10) in Bezug auf ihre Längen variabel einstellbar sind.

4. Hydro-pneumatische Achse (1) für Reisemobile, Kastenwägen, Kofferfahrzeuge, Verkaufsfahrzeuge oder Vans nach einem der Ansprüche 1, 2 oder 3, **dadurch gekennzeichnet, dass** die Vorrichtung (20) zur Regelung und Steuerung der Längen (22) der beiden rückseitigen Hydraulikzylinder (10) der Liftachse (12) einen, zwei oder mehrere Druck-Sensoren (25) zur Ermittlung des beladungsabhängigen Druckes durch den Lade-Rahmen (4) umfasst, wobei diese Druck-Sensoren (25) mit der Datenverarbeitungseinrichtung (24) in elektrisch leitender Verbindung stehen, welche die von den Druck-Sensoren (25) ermittelten Ist-Werte mit in der Datenverarbeitungseinrichtung (24) hinterlegten Grenz-Werten vergleicht und bei einer Unterschreitung des Druck-Grenz-Wertes durch Zufuhr von Öl zu dem rückseitigen Hydraulikzylinder (10) und durch ein Sperren des Tragachse (11)-Liftachse (12)-Verbindungsventils (37) automatisch eine Anhebung der Liftachse (12) mittelbar oder unmittelbar veranlasst und bei Überschreitung des Druck-Grenz-Wertes durch Öffnen des Tragachse (11)- Liftachse (12)- Verbindungsventils (37) automatisch eine Absenkung der Liftachse (12) - im Rahmen einer Überwachung des auf dem Rahmen (4) aufliegenden Ladegewichtes - mittelbar oder unmittelbar veranlasst.

5. Hydro-pneumatische Achse (1) für Reisemobile, Kastenwägen, Kofferfahrzeuge, Verkaufsfahrzeuge oder Vans nach Anspruch 4, **dadurch gekennzeichnet, dass** in der Datenverarbeitungseinrichtung (24) für die den Systemdruck messenden Drucksensoren (25) ein Druck-Grenzwert 1 für ein Stehen des Fahrzeuges (2) auf allen drei Achsen [Vorderachse (28), Tragachse (11) und Liftachse (12)] und ein Druck-Grenzwert 2 für ein Stehen des Fahrzeuges (2) auf zwei Achsen [Vorderachse (28) und Tragachse (11)] hinterlegbar sind, wobei die Datenverarbeitungseinrichtung (24) nur dann ein Anheben der Liftachse (12) mittels der rückseitigen Hydraulikzylinder (10) ermöglicht, wenn der von den Drucksensoren (25) ermittelte Ist-Systemdruck kleiner als der Druck-Grenzwert 1 ist und wobei die Datenverarbeitungseinrichtung (24) bei angehobener Liftachse (12) automatisch deren Absenkung mittels der rückseitigen Hydraulikzylinder (10) veranlasst, wenn nach einer Beladung der Druck-Grenzwert 2 überschritten wird, wobei die Datenverarbeitungseinrichtung (24) bei abgesenkter Liftachse (12) deren Anhebung mittels der rückseitigen Hydraulikzylinder (10) veranlasst, wenn nach einer Entladung des Rahmens (4) der Druck-Grenzwert 1 unterschritten wird.

6. Hydro-pneumatische Achse (1) für Reisemobile, Kastenwägen, Kofferfahrzeuge, Verkaufsfahrzeuge oder Vans nach einem der vorhergehenden Ansprüche 1 bis 5, **dadurch gekennzeichnet, dass** ein Tragachse (11)- Liftachse (12)-Verbindungsventil (37) öffnet, wenn sowohl die Tragachse (11) als auch die Liftachse (12) mit dem Untergrund (26) mittelbar oder unmittelbar in Kontakt stehen oder wenn beabsichtigt ist, dass die Liftachse (12) von ihrem angehobenen Zustand in ihren abgesenkten Zustand verändert werden soll, wobei dann die frontseitigen Hydraulikzylinder (8) und die rückseitigen Hydraulikzylinder (10) jeweils kolbenbodenseitig miteinander in Verbindung stehen.

7. Hydro-pneumatische Achse (1) für Reisemobile, Kastenwägen, Kofferfahrzeuge, Verkaufsfahrzeuge oder Vans nach einem der vorhergehenden Ansprüche 1 bis 6, **dadurch gekennzeichnet, dass** die Datenverarbeitungseinrichtung (24) auf durch einen über ihre Eingabeeinrichtung (27) eingegebenen Anfahrhilfe-Befehl für einen kurzen Zeitraum in dem Bereich von bis zu 90 Sekunden die vollständige oder teilweise Anhebung der Liftachse (12) durch den rückseitigen Hydraulikzylinder (10) in beladenem Zustand des Lade-Rahmens (4), in dem sowohl die Tragachse (11) als auch die Liftachse (12) mit dem Untergrund (26) in Kontakt stehen, veranlasst, um den Bodendruck der angetriebenen Tragachse (11) zu erhöhen, wobei die Anfahrhilfe-Funktion beendbar ist a) durch einen auf der Eingabeeinrichtung (27) der Datenverarbeitungseinrichtung (24) manuell eingebbaren Abbruchbefehl und/oder b) durch die Überschreitung der Fahrgeschwindigkeit des Kraftfahrzeuges (2) von mehr als 30 km/h und/oder c) durch Ablauf einer Frist von maximal 90 Sekunden nach dem Start der Anfahrhilfe-Funktion.

8. Hydro-pneumatische Achse (1) für Reisemobile, Kastenwägen, Kofferfahrzeuge, Verkaufsfahrzeuge oder Vans nach Anspruch 7, **dadurch gekennzeichnet, dass** im Rahmen der Funktion "Anfahrhilfe" zur Steigerung der Traktion an der angetriebenen Tragachse (11) die Liftachse (12) so lange nach oben angehoben wird, bis sich eine Druckerhöhung in dem Bereich von 20 % bis 40 % - bezogen auf den von den Drucksensoren (25) ermittelten Ist-System-Druck - einstellt, wobei der zulässige, von den Drucksensoren (25) ermittelte System-Druck in dem Bereich von 50 bar bis 200 bar liegt.

9. Hydro-pneumatische Achse (1) für Reisemobile, Kastenwägen, Kofferfahrzeuge, Verkaufsfahrzeuge oder Vans nach einem der vorhergehenden Ansprüche 1 bis 8, **dadurch gekennzeichnet, dass** die Vorrichtung (19, 20) zur Regelung und Steuerung der Längen (21, 22) der Hydraulikzylinder (8, 10) eine oder mehrere Einrichtungen zur Anzeige zumindest der jeweils aktiven Betriebsart und/oder Funktion "manuell", "automatische Niveauregelung", "Niveauüberwachung", "Kalibrierung", "Liftfunktion" und "Anfahrhilfe" umfasst, wobei diese Vorrichtung (19, 20) zusätzlich eine Eingabeeinrichtung (27) für die Datenverarbeitungseinrichtung (24) umfasst, die manuell betätigbare Bedienelemente zumindest für die Funktionen "Achsniveau manuell absenken", "Achsniveau manuell anheben", "automatische Niveauregelung", "Kalibrierung" und "Anfahrhilfe" trägt.

10. Hydro-pneumatische Achse (1) für Reisemobile, Kastenwägen, Kofferfahrzeuge, Verkaufsfahrzeuge oder Vans nach einem der vorhergehenden Ansprüche 1 bis 9, **dadurch gekennzeichnet, dass** die frontseitigen Hubzylinder (8) und/oder die rückseitigen Hubzylinder (10) - abhängig oder unabhängig voneinander - eine Schwenkbewegung des Rahmens (4) um die Querachse (57) und/oder um die Längsachse (3) bewirken und dadurch eine besonders gründliche und vollständige Entleerung von Fäkalien- oder Wassertanks gestatten.

11. Hydro-pneumatische Achse (1) für Reisemobile, Kastenwägen, Kofferfahrzeuge, Verkaufsfahrzeuge oder Vans nach einem der Ansprüche 1 bis 10, **dadurch gekennzeichnet, dass** über die beiden Vorrichtungen (19, 20) zur Regelung und Steuerung der Längen (21, 22) der beiden frontseitigen Hydraulikzylinder (8) und der beiden rückseitigen Hydraulikzylinder (10) - abhängig oder unabhängig voneinander - eine vertikale Höhenverstellbarkeit des Rahmens (4) - zur Erleichterung des Transportes auf Fähren und zur Erhöhung des hinteren und des vorderen Böschungswinkels - in dem Bereich von etwa 30,0 mm bis 150,0 mm, realisierbar ist.

12. Hydro-pneumatische Achse (1) für Reisemobile, Kastenwägen, Kofferfahrzeuge, Verkaufsfahrzeuge oder Vans nach einem der Ansprüche 1 bis 11, **dadurch gekennzeichnet, dass** das oberhalb der Membrane (14) befindliche Federungs-Gas (16) in dem oder den Blasenspeichern (13) einen Vorspanndruck aufweist - zur Einstellung der Federsteifigkeit und damit zur Einstellung des Federungskomforts -, welcher zu dem in dem hydraulischen System bei Beladung zu erwartenden Maximal-Systemdruck in einem Verhältnis von 1:3 bis 1:5 steht und welcher in dem Bereich von 25,0 bar bis 50,0 bar liegt, wobei dieser Vorspanndruck einmalig von Seiten des Herstellers bei Inbetriebnahme und/oder während der Fahrt einstellbar ist.

13. Hydro-pneumatische Achse (1) für Reisemobile, Kastenwägen, Kofferfahrzeuge, Verkaufsfahrzeuge oder Vans nach einem der Ansprüche 1 bis 12, **dadurch gekennzeichnet, dass** die frontseitigen Hydraulikzylinder (8) und/oder die rückseitigen Hydraulikzylinder (19) jeweils mit zwei oder mehreren Blasenspeichern (13) in mittelbarer oder unmittelbarer Verbindung stehen, wobei jeder Blasenspeicher (13) einen anderen Vorspanndruck des oberhalb der Membrane (14) befindlichen Federungs-Gases (16) aufweist und wobei durch Freischaltung einer Verbindung zwischen dem jeweiligen Hydraulikzylinder (8, 10) einerseits und dem Blasenspeicher (13) mit dem passenden Vorspanndruck andererseits, unterschiedliche Federsteifigkeiten einstellbar sind.
